# EUROPÄISCHE PATENTANMELDUNG

(11) **EP 4 822 308 A1**
(43) Veröffentlichungstag der Anmeldung: **14.10.2026**
(21) Anmeldenummer: 25169544.1
(22) Anmeldetag: 09.04.2025
(51) Int. Cl.: G01G 11/00

(54) **FÖRDERSYSTEM FÜR GIESSFORMEN ZUR HERSTELLUNG VON LEBENSMITTELPRODUKTEN**

(71) Anmelder: Bühler GmbH, 51580 Reichshof (DE)
(72) Erfinder: WUTTE, Marc, 50676 Köln (DE); SCHEPERS, Marko, 51491 Overath (DE); ANOKHIN, Alexander, 51067 Köln (DE)
(74) Vertreter: HGF

(57) **Zusammenfassung**

Die Erfindung betrifft ein Fördersystem (10) für Gießformen (12) zur Herstellung von Lebensmittelprodukten, insbesondere Süßwaren, welches eine Fördereinheit (14), zumindest eine Gießform (12), und eine Waageneinheit (16) aufweist, wobei die Fördereinheit (14) dazu eingerichtet ist, die Gießform (12) entlang einer vordefinierten Förderrichtung (20) bei einer vorbestimmten Geschwindigkeit zu transportieren, wenn die kraft- und/oder formschlüssige Verbindung (18) vorliegt, wobei die Waageneinheit (16) entlang der Förderrichtung (20) angeordnet ist, wobei die Waageneinheit (16) dazu eingerichtet ist, die Gießform (12) für eine vorbestimmte Distanz (22) entlang der Förderrichtung (20) bei einer zweiten Geschwindigkeit zu transportieren, wobei die Fördereinheit (14) dazu eingerichtet ist, zumindest für die vorbestimmte Distanz (22) eine kraft- und/oder formschlüssige Verbindung (18) im Wesentlichen aufzulösen, wobei die Waageneinheit (16) dazu eingerichtet ist, innerhalb der vorbestimmten Distanz (22) ein Gewicht der Gießform (12) zu ermitteln.

## Beschreibung

### Technisches Gebiet

Die Erfindung betrifft ein Fördersystem für Gießformen zur Herstellung von Lebensmittelprodukten, ein Verfahren zum Betreiben eines Fördersystems zur Herstellung von Lebensmittelprodukten sowie eine Steuereinheit zum Betreiben eines Fördersystems.

### Hintergrund der Erfindung

Derzeit besteht eine Vielzahl an unterschiedlichen Lösungen zu einem Transport von Gießformen oder Ähnliches in der Lebensmittelindustrie. Die zunehmenden Anforderungen an die Nachhaltigkeit der Lebensmittelherstellung als auch die erhöhten Qualitätserfordernisse auf Kundenseite sorgen für einen kontinuierlichen Bedarf an innovativen und robusten Lösungen für Fördersysteme im Lebensmittelbereich.

### Zusammenfassung der Erfindung

Das Ziel der vorliegenden Erfindung kann darin gesehen werden, ein verbessertes Fördersystem für Gießformen zur Herstellung von Lebensmittelprodukten bereitzustellen, welches die Merkmale des unabhängigen Anspruchs 1 aufweist.

Ein Vorteil der vorliegenden Erfindung kann darin gesehen werden, dass während des Betriebs, bevorzugt kontinuierlich oder inline des Fördersystems das Gewicht jeder Form unterbrechungsfrei ermittelt werden kann und somit eine kontinuierliche Optimierung der in die Gießform eingefüllten Masse erfolgen kann, um das anvisierte Gewicht der Befüllung der Gießformen möglichst genau zu erreichen. Ein weiterer Vorteil ist, dass durch Abweichungen im Gewicht Unstimmigkeiten in der Prozesskette früh erkannt werden können, um beispielsweise Wartungsschritte oder Ähnliches auszulösen. Ein weiterer Vorteil kann sein, dass das Gewicht des Lebensmittelproduktes, welches in die Gießform gefüllt wird, für jede Gießform individuell ermittelt werden kann, ohne dabei das Fördersystem oder den Herstellprozess zu pausieren. Somit kann ohne den Einsatz von Personal das Gewicht der Gießform bzw. des eingefüllten Lebensmittelprodukts ermittelt werden. Ein weiterer Vorteil kann beispielsweise sein, dass bei einem Unter- und/oder Übergewicht in der Dosiermenge an Lebensmittelprodukt in die Gießform schnell reagiert werden kann, wenn eine Abweichung festgestellt wird. Insbesondere deutlich schneller als bestehende Systeme bei welchen das Gewicht erst nach dem Ausformen des Lebensmittelprodukts aus der Gießform ermittelt wird. Somit kann insbesondere durch die schnellere Anpassungsmöglichkeit mittels der Inline-Gewichtsermittlung eine hohe Menge an Ausschuss von Lebensmittelprodukten vermieden werden.

Dies wird erfindungsgemäß dadurch erreicht, dass das Fördersystem für Gießformen zur Herstellung von Lebensmittelprodukten, insbesondere Süßwaren, aufweisend:
- eine Fördereinheit,
- zumindest eine Gießform,
- eine Waageneinheit,
wobei die Fördereinheit dazu eingerichtet ist, eine kraft- und/oder formschlüssige Verbindung mit zumindest einer Gießform auszubilden, wobei die Fördereinheit dazu eingerichtet ist, die Gießformen entlang einer vordefinierten Förderrichtung bei einer vorbestimmten Geschwindigkeit zu transportieren, wenn die kraft- und/oder formschlüssige Verbindung vorliegt, wobei die Waageneinheit entlang der Förderrichtung angeordnet ist, wobei die Waageneinheit dazu eingerichtet ist, die Gießform für eine vorbestimmte Distanz entlang der Förderrichtung bei einer zweiten Geschwindigkeit zu transportieren, wobei die Fördereinheit dazu eingerichtet ist, zumindest für die vorbestimmte Distanz die kraft- und/oder formschlüssige Verbindung im Wesentlichen aufzulösen, wobei die Waageneinheit dazu eingerichtet ist, innerhalb der vorbestimmten Distanz ein Gewicht der Gießform zu ermitteln.

In anderen Worten legt die Fördereinheit die Gießform durch das Auflösen der kraft- und/oder formschlüssige Verbindung auf die Waageneinheit ab, wobei die Waageneinheit die Gießform bei einer derartigen Geschwindigkeit transportiert, dass die Gießform zur Fördereinheit kontaktfrei ist, um somit das Gewicht der Gießform ermitteln zu können. Im Wesentlichen aufzulösen kann in diesem Zusammenhang insbesondere bedeuten, dass es keinerlei Kontakt zwischen der Gießform und der Fördereinheit gibt, welcher den Prozess des Wiegens der Gießform zur Ermittlung des Gewichts der Gießform beeinflusst. Weiter bevorzugt kann im Wesentlichen auflösen in diesem Zusammenhang bedeuten, dass die Fördereinheit die Gießform auf die Waageneinheit ablegt und erst durch den Antrieb der Gießform durch die Waageneinheit die Gießform von der Fördereinheit beabstandet wird. Sobald die Waageneinheit die Gießform greift und bei der zweiten Geschwindigkeit transportiert, wird die Gießform von der Fördereinheit oder dem Eingriffselement der Fördereinheit, welches in die Gießform eingreift, beabstandet, sodass sich die kraft- und/oder formschlüssige Verbindung auflöst. Sobald kein Kontakt zwischen der Gießform und der Fördereinheit besteht, kann das Gewicht der Gießform durch die Waageneinheit korrekt bestimmt werden, insbesondere ohne Indifferenzen bzw. Einflüsse der Fördereinheit auf die Gießform und/oder die Waageneinheit. Beispielsweise kann mittels des Fördersystems bei einer kontinuierlich laufenden Fördereinheit mit Ketten und Kettenbolzen, welche in die Gießform eingreifen können, die Form während des Wiegevorgangs von den Kettenbolzen und anderen Anlagenteilen entkoppelt werden. Somit können bevorzugt verlässliche Messergebnisse des Gewichts der Gießform bzw. der Befüllung der Gießform mit Lebensmittelprodukt im kontinuierlichen Betrieb des Fördersystems ermittelt werden, insbesondere bei voller oder höchster Anlagengeschwindigkeit. Dies kann dadurch erreicht werden, dass die Fördereinheit die Gießform zeitweise auf der Waageneinheit ablegt und für die Zeit des Ablegens die Waageneinheit die Gießform weitertransportiert.

Die abhängigen Ansprüche zeigen bevorzugte Weiterbildungen der Erfindung.

Vorzugsweise ist die zweite Geschwindigkeit gleich oder größer als die vorbestimmte Geschwindigkeit, sodass das Gewicht der Gießform kontaktfrei zur Fördereinheit ermittelt wird.

Ein Vorteil dieser Ausführungsform ist, dass mit einer gezielten Steuerung der zweiten Geschwindigkeit die Gießform von der Fördereinheit beabstandet werden kann, um somit einen Messfehler durch Kontakt der Gießform zur Fördereinheit zu minimieren bzw. zu vermeiden. Bevorzugt kann die zweite Geschwindigkeit insbesondere derart gewählt werden, dass die Gießform von der Fördereinheit beabstandet wird, um somit das Wiegen zu erleichtern.

Weiter bevorzugt weist die Fördereinheit zumindest eine erste Bandeinheit und eine zweite Bandeinheit auf, an welcher jeweils zumindest ein Eingriffselement angeordnet ist, welches dazu eingerichtet ist, in die Gießform einzugreifen, um die kraft- und /oder formschlüssige Verbindung herzustellen, wobei die erste Bandeinheit der zweiten Bandeinheit im Wesentlichen gegenüberliegend parallel angeordnet ist, wobei die Fördereinheit ein erstes Führungselement und ein zweites Führungselement aufweist, welche dazu eingerichtet sind, die erste Bandeinheit und die zweite Bandeinheit zu führen, wobei das erste Führungselement und das zweite Führungselement dazu eingerichtet sind, einen Abstand entlang einer ersten Achse zwischen den gegenüberliegenden Eingriffselementen zu erhöhen. Eine Bandeinheit kann auch eine umlaufende Kette oder Ähnliches sein.

Ein Vorteil dieser Ausführungsform ist, dass durch das Aufweiten des Abstandes der Eingriffselemente zueinander die kraft- und/oder formschlüssige Verbindung zwischen der Gießform und der Fördereinheit aufgelöst werden kann. Somit kann sichergestellt werden, dass das Wiegen nicht beeinträchtigt wird. Bevorzugt kann es sich bei dem ersten und zweiten Führungselement, um eine Führung oder ähnlichem für die erste Bandeinheit bzw. die zweite Bandeinheit handeln. Dadurch dass die Gießformen mit der ersten und zweiten Bandeinheit verbunden werden können, folgen die Gießform dem durch die Führungselemente definierten Pfad in Förderrichtung. Dieser Pfad richtet die Gießformen derart zu der Waageneinheit aus, dass für die vorbestimmte Distanz die kraft- und/oder formschlüssige Verbindung zwischen der Fördereinheit und der Gießform aufgelöst bzw. wiederhergestellt werden kann. Im Wesentlichen parallel kann in diesem Zusammenhang insbesondere eine Abweichung von +/-10° bedeuten.

Weiter bevorzugt sind das erste Führungselement und das zweite Führungselement dazu eingerichtet, den Abstand zwischen den Eingriffselementen bis zu einem vorbestimmten Grenzwert zu erhöhen, um die kraft- und/oder formschlüssige Verbindung für die vorbestimmte Distanz aufzulösen.

Ein Vorteil dieser Ausführungsform ist, dass der vorbestimmte Grenzwert derart gewählt werden kann, dass ein sicheres Übergeben der Gießform von der Fördereinheit an die Waageneinheit gewährleistet werden kann.

Weiter bevorzugt sind das erste Führungselement und das zweite Führungselement dazu eingerichtet, den Abstand zwischen den Eingriffselementen nach einem Verlassen der vorbestimmten Distanz zu reduzieren, um die kraft- und/oder formschlüssige Verbindung wiederherzustellen.

Ein Vorteil dieser Ausführungsform ist, da sobald der Prozessschritt des Wiegens der Gießform abgeschlossen ist, durch das Eingreifen der Eingriffselemente in die Gießform die kraft- und/oder formschlüssige Verbindung wiederhergestellt wird, sodass auf der Waageneinheit Platz für die nächste Gießform geschaffen wird. Somit kann ein unterbrechungsfreies Ermitteln der Gewichte der jeweiligen auf der Waageneinheit platzierten Gießform erfolgen.

Weiter bevorzugt ist die Fördereinheit dazu eingerichtet, die Gießform in der vorbestimmten Distanz auf die Waageneinheit abzulegen, um die kraft- und/oder formschlüssige Verbindung aufzulösen.

Ein Vorteil dieser Ausführungsform ist, dass durch das Beabstanden der Gießform von der Fördereinheit die Messung des Gewichtes der Gießform nicht beeinträchtigt wird.

Weiter bevorzugt ist die Fördereinheit dazu eingerichtet, die Gießform nach der vorbestimmten Distanz von der Waageneinheit wieder aufzunehmen.

Ein Vorteil dieser Ausführungsform ist, dass die Ermittlung des Gewichtes unterbrechungsfrei für das Fördersystem erfolgen kann, da die Fördereinheit die Gießform wieder aufnimmt und somit Platz für die nächste Gießform schafft.

Vorzugsweise sind das erste Führungselement und das zweite Führungselement dazu eingerichtet, die Eingriffselemente entlang einer zweiten Achse zu verlagern, welche im Wesentlichen orthogonal zur ersten Achse ausgerichtet ist, um die Gießform an die Waageneinheit abzugeben und/oder von der Waageneinheit aufzunehmen.

Ein Vorteil dieser Ausführungsform ist, dass eine Sicherheitsebene hinzugefügt wird, da durch das Herausziehen und das Absenken der Eingriffselemente zum einen sichergestellt werden kann, dass das ermittelte Gewicht der Gießform frei von Einflüssen der Fördereinheit ist als auch bei einem möglichen Herunterfallen der Gießform von der Waageneinheit diese erneut auf die Eingriffselemente fällt, um somit einem Blockieren der Fördereinheit oder Ähnliches vorzubeugen. Im Wesentlichen orthogonal umfasst in diesem Zusammenhang insbesondere eine Abweichung von +/-10°. Bevorzugt kann unter dem Begriff "aufzunehmen" jede Art von Vorgang oder Ähnlichem verstanden werden, welcher die kraft- und/oder formschlüssige Verbindung zwischen der Fördereinheit und der Gießform wiederherstellt nachdem die Gießform gewogen wurde.

Weiter bevorzugt sind das erste Führungselement und das zweite Führungselement dazu eingerichtet, die kraft- und/oder formschlüssige Verbindung mittels einer zweidimensionalen Bewegung entlang der ersten Achse und der zweiten Achse aufzulösen und/oder herzustellen.

Ein Vorteil dieser Ausführungsform ist, dass ein jeweiliges Einsatzszenario des Fördersystems bzw. an eine jeweilige Gießform die zweidimensionale Bewegung an die jeweiligen Gegebenheiten angepasst werden kann.

Weiter bevorzugt ist an dem ersten Führungselement und an dem zweiten Führungselement jeweils ein Steg angeordnet, wobei der Steg dazu eingerichtet ist, die zumindest eine Gießform entlang der Förderrichtung zu führen.

Ein Vorteil dieser Ausführungsform ist, dass ein Verkippen oder Ähnliches der Gießform verhindert werden kann, da diese auf dem Steg aufliegt bzw. über diesen gleitet.

Weiter bevorzugt weist die Fördereinheit zumindest einen Stützsteg auf, welcher zwischen der ersten Bandeinheit und der zweiten Bandeinheit angeordnet ist, wobei der Stützsteg in einem vorbestimmten Abstand zur Waageneinheit angeordnet ist, um ein Aufschieben der Gießform auf die Waageneinheit zu erleichtern.

Ein Vorteil dieser Ausführungsform ist, dass Gießformen etwas durchhängen können, wobei der Stützsteg hilft, dass ein unterbrechungsfreies Aufladen auf die Waageneinheit ermöglicht werden kann.

Vorzugsweise ist das Fördersystem dazu eingerichtet, dass für die vorbestimmte Distanz die Gießform im Wesentlichen ausschließlich Kontakt mit der Waageneinheit aufweist.

Ein Vorteil dieser Ausführungsform ist, dass die Ermittlung des Gewichtes der Gießform nicht durch weitere Komponenten verfälscht wird.

Vorzugsweise weist die Waageneinheit zumindest ein Bewegungselement auf, welches dazu eingerichtet ist, die Gießform für die vorbestimmte Distanz bei der zweiten Geschwindigkeit zu transportieren.

Ein Vorteil dieser Ausführungsform ist, dass das Bewegungselement direkt an der Waageneinheit angeordnet ist und somit das Messergebnis zur Ermittlung des Gewichts der Gießeinheit nicht verfälscht wird. Weiter bevorzugt kann das Bewegungselement beispielsweise ein Förderband oder Ähnliches sein, um die Gießform bei der zweiten Geschwindigkeit transportieren zu können.

Weiter bevorzugt weist das Fördersystem zumindest ein Sensorelement auf, wobei die Waageneinheit dazu eingerichtet ist, mittels des Sensorelements eine Position der Gießform zu ermitteln, wobei die Waageneinheit dazu eingerichtet ist, das Gewicht der Gießform zu ermitteln, wenn die Position der Gießform in der vorbestimmten Distanz ist.

Ein Vorteil dieser Ausführungsform ist, dass mittels des Sensorelements die Qualität der Messung des Gewichts der Gießform weiter erhöht werden kann, da die Gewichtswerte abgefragt werden, wenn die Gießform in der dafür vorgesehenen Position ist. Somit kann sichergestellt werden, dass eventuelle Abweichungen im Gewicht aufgrund einer falschen Positionierung oder ungenauen Positionierung ausgeklammert werden können.

Weiter bevorzugt weist die Waageneinheit einen Hubmechanismus auf, wobei der Hubmechanismus dazu eingerichtet ist, die Waageneinheit derart von der Förderrichtung zu beabstanden, dass bei einem vorbestimmten Zeitraum die Waageneinheit frei von einem Kontakt mit einer Gießform ist, um die Waageneinheit zu tarieren.

Ein Vorteil dieser Ausführungsform ist, dass ohne Unterbrechung des Fördersystems die Waageneinheit tariert werden kann, um somit die Messgenauigkeit der Gewichte der Gießformen weiter zu erhöhen. Weiter bevorzugt kann die Waageneinheit auch einen Schritt des Kalibrierens aufweisen, welcher bevorzugt als Wartungsschritt ausgestaltet sein kann. Weiter bevorzugt kann das Tarieren während des Betriebs des Fördersystems erfolgen, sodass dies einen Prozessschritt darstellt, welcher jedoch das Transportieren der Gießformen nicht unterbricht.

Weiter bevorzugt weist die Gießform an gegenüberliegenden Seiten jeweils einen Absatz auf, wobei die Eingriffselemente der ersten Bandeinheit und der zweiten Bandeinheit für den vorbestimmten Zeitraum in Eingriff mit den Absätzen stehen, um die Gießform entlang der Förderrichtung zu transportieren.

Ein Vorteil dieser Ausführungsform ist, dass, wenn die Waageneinheit von der Förderrichtung beabstandet ist, um die Waageneinheit zu tarieren, können die Eingriffselemente in die Absätze der Gießformen eingreifen, sodass die Gießformen nicht aus dem Fördersystem fallen.

Weiter bevorzugt weist das Fördersystem eine Vielzahl von Gießformen auf, wobei die Fördereinheit dazu eingerichtet ist, nur eine einzelne Gießform der Vielzahl von Gießformen für die vorbestimmte Distanz in Kontakt mit der Waageneinheit zu bringen.

Ein Vorteil dieser Ausführungsform ist, dass eine Vielzahl von Gießformen kontinuierlich gewogen werden können, um somit die Gesamtprozesssicherheit weiter zu erhöhen.

Weiter bevorzugt sind die erste Bandeinheit und die zweite Bandeinheit dazu eingerichtet, die zumindest eine Gießform entlang der Förderrichtung bei der vorbestimmten Geschwindigkeit zu transportieren.

Ein Vorteil dieser Ausführungsform ist, dass die Bandeinheit in Abhängigkeit einer Art der Gießform die Gießform bei unterschiedlichen Geschwindigkeiten transportieren kann.

Weiter bevorzugt sind die Eingriffselemente dazu eingerichtet, in einen jeweiligen Abschnitt der Gießform einzugreifen, um die kraft- und/oder formschlüssige Verbindung zwischen der Fördereinheit und der Gießform auszubilden.

Ein Vorteil dieser Ausführungsform ist, dass die Gießform in eine Vielzahl von Dimensionen gegenüber der Fördereinheit gesichert werden kann. Beispielsweise kann das Eingriffselement ein Bolzen oder Ähnliches sein, wobei die Gießform im jeweiligen Abschnitt eine Buchse oder Ähnliches aufweist, sodass der Bolzen in die Buchse greifen kann.

Weiter bevorzugt ist die Fördereinheit dazu eingerichtet, die Eingriffselemente aus dem jeweiligen Abschnitt zu verlagern, um die kraft- und/oder formschlüssige Verbindung für die vorbestimmte Distanz aufzulösen.

Ein Vorteil dieser Ausführungsform ist, dass durch beispielsweise ein einfaches Einschieben oder Herausziehen eines Bolzens als Eingriffselement in einen jeweiligen Abschnitt als Buchse mittels kostengünstiger Elemente die kraft- und/oder formschlüssige Verbindung aufgelöst werden kann. Weiter bevorzugt können angrenzend an den jeweiligen Abschnitt die Absätze der Gießformen angebracht werden, sodass die Bolzen der Eingriffselemente in einem vorbestimmten Abstand zu den Absätzen angeordnet sind, wenn die Gießformen auf der Waageneinheit aufliegen und wenn die Waageneinheit in einer Tarierposition ist, die Bolzen in die jeweiligen Absätze eingreifen können.

Ein weiterer Aspekt der Erfindung betrifft ein Verfahren zum Betreiben eines Fördersystems zur Herstellung von Lebensmittelprodukten, insbesondere Süßwaren, aufweisend die Schritte:
- Positionieren einer Gießform auf einer Waageneinheit bei einer vorbestimmten Verfahrgeschwindigkeit der Gießform,
- Ermitteln eines Gewichts der Gießform mittels der Waageneinheit bei zumindest der vorbestimmten Verfahrgeschwindigkeit, wobei die Gießform beim Ermitteln des Gewichts der Gießform im Wesentlichen frei von einem Kontakt zu einer Fördereinheit des Fördersystems ist.

Ein Vorteil dieser Ausführungsform ist, dass das Gewicht der Gießform frei von einer Beeinflussung durch die Fördereinheit bei einem kontinuierlichen Betrieb des Fördersystems ermittelt werden kann.

Weiter bevorzugt weist das Verfahren ferner den Schritt auf:
- Aussenden eines Abweichungssignals, wenn das ermittelte Gewicht der Gießform um einen vorbestimmten Betrag von einem Sollgewicht der Gießform abweicht.

Ein Vorteil dieser Ausführungsform ist, dass sofort nach dem Ermitteln des Gewichtes der Gießform einem übergreifenden System angezeigt werden kann, dass eine Gewichtsabweichung vorliegt. Somit kann insbesondere schnell reagiert werden und die weitere Produktion bzw. ein Aufstauen an fehlerhaftem Produkt vermieden werden.

Weiter bevorzugt weist das Verfahren ferner den Schritt auf:
- Ermitteln eines Anpassungssignals basierend auf dem Abweichungssignal, wobei das Anpassungssignal zumindest das ermittelte Gewicht der Gießform, ein Delta zwischen dem ermittelten Gewicht und dem Sollgewicht, und/oder ein Korrektursignal umfasst, wobei das Korrektursignal zumindest einen Indikator aufweist, ein weiteres Gewicht einer weiteren Gießform an das Sollgewicht anzupassen.

Ein Vorteil dieser Ausführungsform ist, dass basierend auf dem ermittelten Gewicht eine Vielzahl von Maßnahmen ergriffen werden kann. Beispielsweise kann ein Delta ausgegeben werden zwischen dem Sollgewicht und dem ermittelten Gewicht. Weiter bevorzugt kann ein Korrektursignal ausgegeben werden, an welches eine Befüllmenge der weiteren Gießformen mit Lebensmittelprodukt angepasst wird, um somit das ermittelte Gewicht der weiteren Gießformen an das Sollgewicht der jeweiligen Gießform anzunähern. Somit kann ohne Zutun von Personal oder weiteren Messschritten eine kontinuierliche Überwachung und Anpassung der Befüllung der Gießformen mit Lebensmittelprodukt erfolgen.

Ein weiterer Aspekt der Erfindung betrifft eine Steuereinheit zum Betreiben eines Fördersystems, welches dazu eingerichtet ist, Schritte des Verfahrens wie voranstehend und nachfolgend beschrieben auszuführen und/oder dazu eingerichtet ist, in Signalverbindung mit einem Fördersystem, wie voranstehend und nachfolgend beschrieben, zu stehen und/oder dazu eingerichtet ist, ein erstes Geschwindigkeitssignal und ein zweites Geschwindigkeitssignal zu empfangen, wobei das erste Geschwindigkeitssignal indikativ eine Transportgeschwindigkeit einer Gießform bei einem Kontakt mit einer Fördereinheit ist, wobei das zweite Geschwindigkeitssignal indikativ für eine Fördergeschwindigkeit einer Waageneinheit ist, wenn die Gießform in Kontakt zur Waageneinheit steht und im Wesentlichen kontaktfrei zu der Fördereinheit ist, wobei die Steuereinheit dazu eingerichtet ist, ein Deltasignal auszugeben, wobei das Deltasignal dazu eingerichtet ist, das erste Geschwindigkeits- und/oder das zweite Geschwindigkeitssignal anzupassen, um den Kontakt zwischen der Gießform und der Fördereinheit aufzulösen und/oder den kontaktfreien Zustand aufrechtzuerhalten.

Ein Vorteil dieser Ausführungsform ist, dass mittels der Steuereinheit der Abstand zwischen einem Eingriffselement der Fördereinheit und einem jeweiligen Abschnitt zum Eingriff der Gießform durch die Anpassung des ersten und zweiten Geschwindigkeitssignals gezielt eingestellt werden kann.

Weiter bevorzugt ist die Steuereinheit dazu eingerichtet, ein Gewichtssignal zu empfangen, wobei das Gewichtssignal indikativ für eine Masse an einem Lebensmittelprodukt ist, welches in die Gießform gefüllt wurde, wobei die Steuereinheit dazu eingerichtet ist, basierend auf dem Gewichtssignal und einer Referenz eines Gewichts der Gießform ein Anpassungssignal auszusenden, wobei das Anpassungssignal dazu eingerichtet ist, das Gewichtssignal an die Referenz anzunähern.

Ein Vorteil dieser Ausführungsform ist, dass die Masse an Lebensmittelprodukt in Abhängigkeit der Messergebnisse des Gewichts der Gießform gezielt angepasst werden kann, um sich somit einem Optimum bzw. Zielwert anzunähern.

### Zeichnungen

Im Folgenden werden bevorzugte Ausführungsformen der Erfindung in Bezugnahme auf die beigefügten Zeichnungen erläutert. Die Zeichnungen zeigen:
Figuren 1 bis 9 ein Fördersystem gemäß einer Ausführungsform.
Figuren 10 und 11 ein Flussdiagramm zur Illustration von Schritten des Verfahrens gemäß einer Ausführungsform.
Figur 12 zeigt eine Steuereinheit gemäß einer Ausführungsform.

### Ausführungsformen der Erfindung

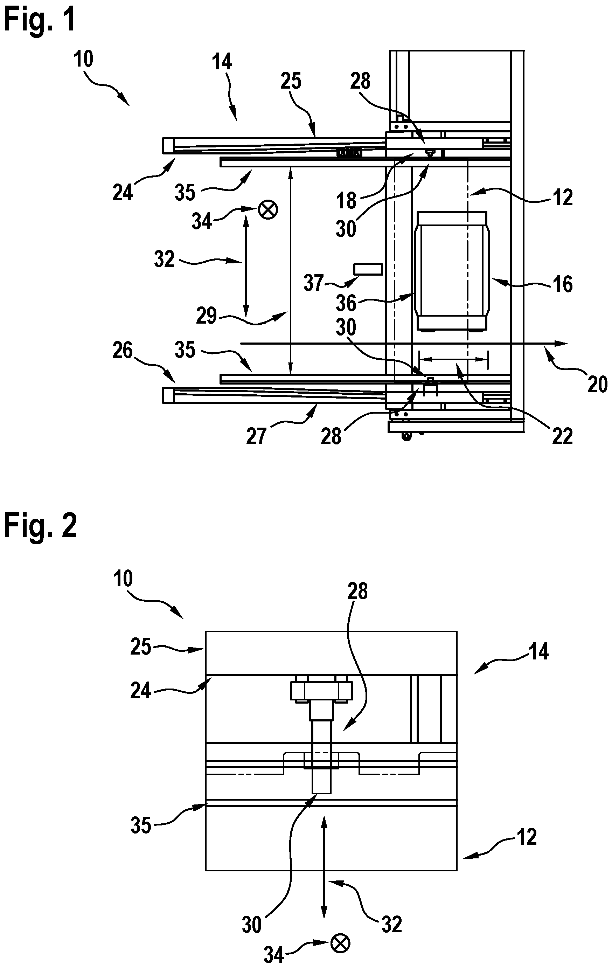

Fig. 1 zeigt ein Fördersystem 10 gemäß einer Ausführungsform. Das Fördersystem 10 für Gießformen 12 zur Herstellung von Lebensmittelprodukten, insbesondere Süßwaren, weist eine Fördereinheit 14, zumindest eine Gießform 12 und eine Waageneinheit 16 auf. Ferner ist die Fördereinheit 14 dazu eingerichtet, eine kraft- und/oder formschlüssige Verbindung 18 mit zumindest einer Gießform 12 auszubilden, wobei die Fördereinheit 14 dazu eingerichtet ist, die Gießform 12 entlang einer vordefinierten Förderrichtung 20 bei einer vorbestimmten Geschwindigkeit zu transportieren, wenn die kraft- und/oder formschlüssige Verbindung 18 vorliegt, wobei die Waageneinheit 16 entlang der Förderrichtung 20 angeordnet ist, wobei die Waageneinheit 16 dazu eingerichtet ist, die Gießform 12 für eine vorbestimmte Distanz 22 entlang der Förderrichtung 20 bei einer zweiten Geschwindigkeit zu transportieren, wobei die Fördereinheit 14 dazu eingerichtet ist, zumindest für die vorbestimmte Distanz 22 die kraft- und/oder formschlüssige Verbindung 18 im Wesentlichen aufzulösen, wobei die Waageneinheit 16 dazu eingerichtet ist, innerhalb der vorbestimmten Distanz 22 ein Gewicht der Gießform 12 zu ermitteln.

Wie in der Fig. 1 dargestellt ist, wird das Fördersystem in einer Draufsicht gezeigt. Die Fördereinheit 14 umfasst dabei eine erste Bandeinheit 24 und eine zweite Bandeinheit 26, welche im Wesentlichen gegenüberliegend parallel zueinander angeordnet sind. Weiter bevorzugt weist jede Bandeinheit 24, 26 ein Eingriffselement 28 auf, um mit einer Gießform 12 verbunden zu werden. Weiter bevorzugt weist die Fördereinheit 14 ein erstes Führungselement 25 auf, welches der ersten Bandeinheit 24 zugeordnet ist, und ein zweites Führungselement 27, welches der zweiten Bandeinheit 26 zugeordnet ist. Bevorzugt sind das erste Führungselement 25 und das zweite Führungselement 27 dazu eingerichtet, einen Abstand 29 entlang einer ersten Achse 32 zwischen den gegenüberliegenden Eingriffselementen 28 zu erhöhen. Weiter bevorzugt ist an dem ersten Führungselement 25 und dem zweiten Führungselement 27 jeweils ein Steg 35 angeordnet, welcher dazu eingerichtet ist, die Gießform 12 entlang der Förderrichtung 20 zu führen. Weiter bevorzugt sind das erste Führungselement 25 und das zweite Führungselement 27 dazu eingerichtet, die Eingriffselemente 28 entlang einer zweiten Achse 34 zu verlagern, welche im Wesentlichen orthogonal zur ersten Achse 32 ausgebildet ist, um die Gießform auf die Waageneinheit 16 abzulegen und/oder von der Waageneinheit 16 aufzunehmen. Weiter bevorzugt weist die Fördereinheit 14 einen Stützsteg 37 auf, welcher in einem vorbestimmten Abstand zur Waageneinheit 16 angeordnet ist, um ein Aufschieben der Gießform 12 auf die Waageneinheit 16 zu erleichtern.

Fig. 2 zeigt ein Fördersystem 10 gemäß einer Ausführungsform. Das Fördersystem 10 weist eine Fördereinheit 14 auf, welche eine erste Bandeinheit 24 sowie ein erstes Führungselement 25 aufweist. Bevorzugt ist an der ersten Bandeinheit 24 ein Eingriffselement 28 angeordnet, welches in eine Gießform 12 eingreifen kann, um eine kraft- und/oder formschlüssige Verbindung mit der Gießform 12 herstellen zu können. Weiter bevorzugt ist das erste Führungselement 25 dazu eingerichtet, für die vorbestimmte Distanz 22 das Eingriffselement 28 aus der Gießform 12 entlang einer ersten Achse 32 zu verlagern. Weiter bevorzugt ist das erste Führungselement 25 dazu eingerichtet, das Eingriffselement 28 entlang einer zweiten Achse 34, welche im Wesentlichen orthogonal zur ersten Achse ist, zu verlagern, wenn das Eingriffselement 28 sich außerhalb der Gießform befindet.

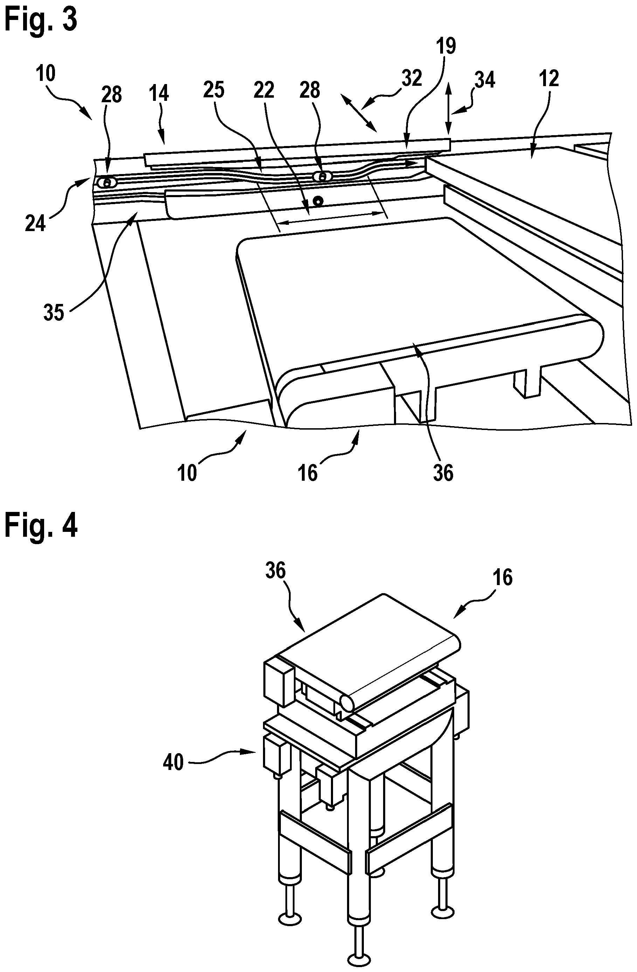

Fig. 3 zeigt ein Fördersystem 10 gemäß einer Ausführungsform. Wie in der Fig. 3 zu erkennen ist, ist die Waageneinheit 16 unterhalb des ersten Führungselements 25 angeordnet, welche die erste Bandeinheit 24 mit dem Eingriffselement 28 führt. Bevorzugt kann dabei das erste Führungselement 25 derart ausgestaltet sein, dass es das Eingriffselement 28 sowohl entlang einer ersten Achse 32 nach außen fährt als auch entlang einer zweiten Achse 34 nach unten absenkt. Somit kann die Gießform 12 auf die Waageneinheit 16 abgesenkt werden. Bevorzugt weist die Waageneinheit 16 ein Bewegungselement 36 auf, das beispielsweise in der Fig. 3 ein Förderband ist.

Fig. 4 zeigt einen Teilbereich des Fördersystems 10 gemäß einer Ausführungsform. Das Fördersystem 10 kann beispielsweise eine Waageneinheit 16 sowie ein Sensorelement 38 aufweisen. Bevorzugt weist die Waageneinheit 16 ein Bewegungselement 36 auf, um die Gießform 12 bei der zweiten Geschwindigkeit zu transportieren. Weiter bevorzugt weist die Waageneinheit 16 einen Hubmechanismus 40 auf, um die Waageneinheit 16 in Bezug auf die Gießform 12 zumindest zeitweise abzusenken, um die Waageneinheit 16 tarieren zu können.

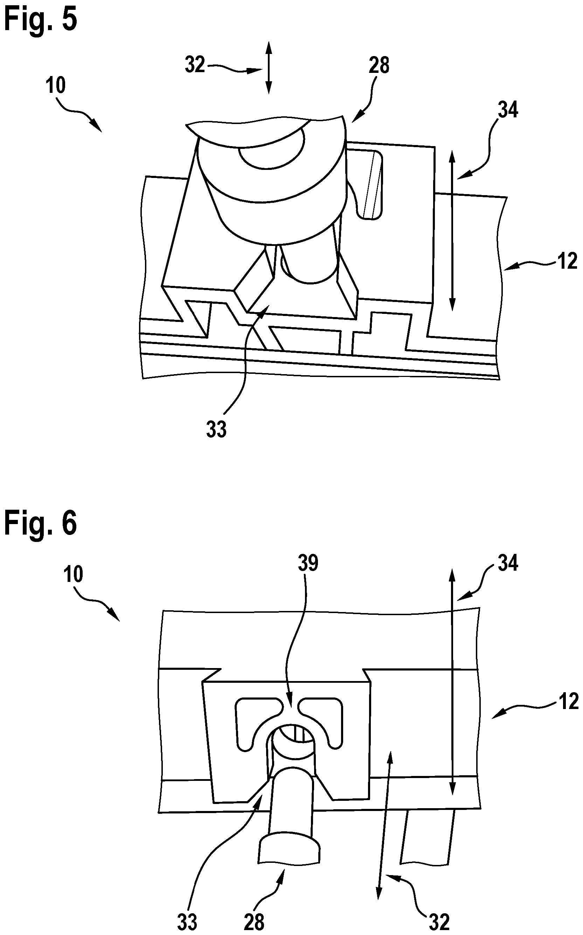

Fig. 5 zeigt ein Fördersystem 10 gemäß einer Ausführungsform. In der Fig. 5 wird verdeutlicht, wie das Eingriffselement 28 in die Gießform 12 eingreifen kann. Bevorzugt weist die Gießform 12 einen jeweiligen Abschnitt 30 auf, welcher beispielsweise als Bogen oder Rundung 39 oder Ähnliches ausgestaltet sein kann. Bevorzugt kann das Eingriffselement 28, wie in der Fig. 5 dargestellt, als Bolzen ausgestaltet werden. Bevorzugt greift der Bolzen des Eingriffselements 28 über einen Absatz 33 in den jeweiligen Abschnitt 30 der Gießform 12 ein, um die kraft- und/oder formschlüssige Verbindung 18 auszubilden, wie dies in der Fig. 5 dargestellt ist.

Fig. 6 zeigt ein Fördersystem 10 gemäß einer Ausführungsform. Wie in der Fig. 6 dargestellt ist, wurde mittels des ersten Führungselements 25 das Eingriffselement 28 aus dem jeweiligen Abschnitt 30 herausverlagert und ist in einem vorbestimmten Abstand zu einem Absatz 33 angeordnet. In dieser Position des Eingriffselements 28 zum Absatz 33 kann vermieden werden, dass, falls die Waageneinheit 16 in einer Position zum Tarieren ist, die Gießform 12 von dem Eingriffselement 28 getrennt wird, sondern das Eingriffselement 28 in den Absatz 33 eingreift.

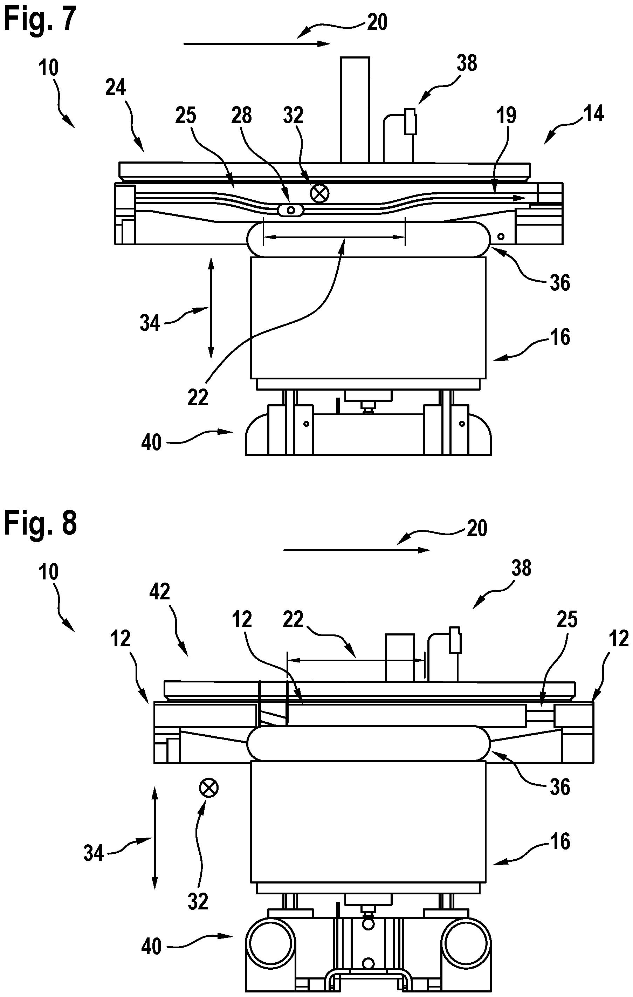

Fig. 7 zeigt ein Fördersystem 10 gemäß einer Ausführungsform. Das Fördersystem 10 umfasst eine Fördereinheit 14. Die Fördereinheit 14 weist ein erstes Führungselement 25 auf, welches eine erste Bandeinheit 24 entlang eines vorbestimmten Pfades 19 führt, sodass das Eingriffselement 28 in die Gießform 12 hineinverlagert als auch aus ihr herausverlagert werden kann. Bevorzugt ist die erste Bandeinheit 24 dazu eingerichtet, das Eingriffselement 28 entlang der Förderrichtung 20 zu führen, sodass in der vorbestimmten Distanz 22 die kraft- und/oder formschlüssige Verbindung zwischen der Gießform 12 und dem Eingriffselement 28 aufgelöst werden kann, sodass die Waageneinheit 16 zum einen das Gewicht der Gießform 12 ermitteln kann als auch mittels des Bewegungselements 36 die Gießform 12 bei der zweiten Geschwindigkeit transportieren kann. Bevorzugt kann ein Sensorelement 38, wenn dies am Fördersystem 10 angeordnet werden kann, die Position der Gießform 12 bestimmen, sodass das Gewicht insbesondere in der vorbestimmten Distanz 22 ermittelt wird. Weiter bevorzugt kann das erste Führungselement 25 derart ausgestaltet sein, dass es das Eingriffselement 28 sowohl entlang einer ersten Achse 32 als auch einer zweiten Achse 34 verlagert, um die kraftschlüssige Verbindung aufzulösen. Ferner umfasst die Waageneinheit 16 einen Hubmechanismus 40, um das Bewegungselement 36 bzw. die Waageneinheit 16 für einen vorbestimmten Zeitraum von den Gießformen 12 zu beabstanden.

Fig. 8 zeigt ein Fördersystem 10 gemäß einer Ausführungsform. Wie in der Fig. 8 dargestellt ist, befördert das Fördersystem 10 eine Vielzahl von Gießformen 42, wobei lediglich eine einzelne Gießform 12 in Kontakt mit der Waageneinheit 16 ist, sodass das Gewicht der Gießform 12 ermittelt werden kann. Bevorzugt kann die Position der Gießform 12 mittels Sensorelements 38 ermittelt werden, sodass das Gewicht der Gießform 12 möglichst genau ermittelt werden kann.

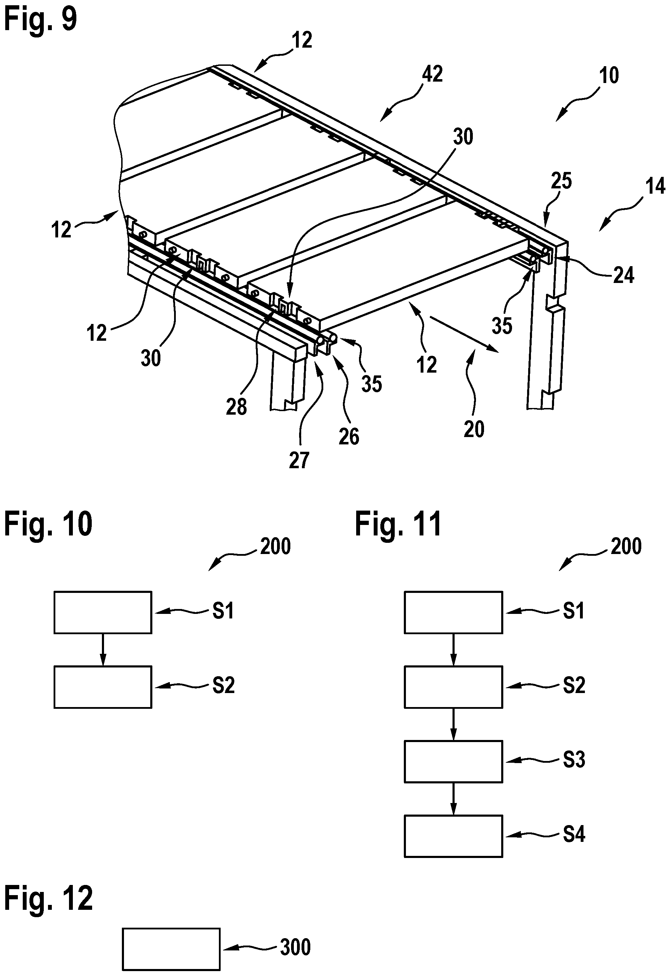

Fig. 9 zeigt das Fördersystem 10 gemäß einer Ausführungsform. Das Fördersystem 10 umfasst eine Fördereinheit 14. Bevorzugt weist das Fördersystem 10 ein erstes Führungselement 25 zum Führen der ersten Bandeinheit 24 auf. Weiter bevorzugt weist die Fördereinheit 14 ein zweites Führungselement 27 zum Führen der zweiten Bandeinheit 26 auf. Wie in der Fig. 9 ersichtlich ist, weist die erste Bandeinheit 24 als auch die zweite Bandeinheit 26 jeweils gegenüberliegende Eingriffselemente 28 auf, welche für jede Gießform 12 der Vielzahl von Gießformen 42 an der Bandeinheit 24, 26 vorgesehen sind.

Fig. 10 zeigt ein Flussdiagramm zur Illustration von Schritten des Verfahrens 200 zum Betreiben eines Fördersystems 10 zur Herstellung von Lebensmittelprodukten, insbesondere Süßwaren, gemäß einer Ausführungsform. Das Verfahren 200 weist bevorzugt die Schritte auf:
- Positionieren S1 einer Gießform 12 auf einer Waageneinheit 16 bei einer vorbestimmten Fahrgeschwindigkeit der Gießform 12,
- Ermitteln S2 eines Gewichts der Gießform 12 mittels der Waageneinheit 16 bei zumindest der vorbestimmten Verfahrgeschwindigkeit, wobei die Gießform 12 beim Ermitteln des Gewichts der Gießform 12 im Wesentlichen frei von einem Kontakt zu einer Fördereinheit 14 des Fördersystems 10 ist.

Fig. 11 zeigt ein Flussdiagramm zur Illustration von Schritten des Verfahrens 200 gemäß einer Ausführungsform. Das Verfahren 200 weist bevorzugt die gleichen Schritte S1 und S2 auf, wie diese bereits hinsichtlich der Fig. 10 erläutert wurden. Ferner weist das Verfahren 200 bevorzugt den Schritt Aussenden S3 eines Abweichungssignals auf, wenn das ermittelte Gewicht der Gießform 12 um einen vorbestimmten Betrag von einem Sollgewicht der Gießform 12 abweicht. Weiter bevorzugt weist das Verfahren 200 den Schritt Ermitteln S4 eines Anpassungssignals basierend auf dem Abweichungssignal auf, wobei das Anpassungssignal zumindest das ermittelte Gewicht der Gießform 12, ein Delta zwischen dem ermittelten Gewicht und dem Sollgewicht und/oder ein Korrektursignal umfasst, wobei das Korrektursignal zumindest einen Indikator aufweist, ein weiteres Gewicht einer weiteren Gießform an das Sollgewicht anzupassen. Dies kann durch eine Rückmeldung an eine im Prozess befindliche Gießmaschine zum Einbringen der Masse in die Gießformen erfolgen, indem sie angewiesen wird die in die Gießformen einzubringende Masse entsprechend zu verändern, um den Zielwert der Befüllung zu erreichen.

Fig 12. zeigt eine Ausführungsform der Steuereinheit 300. Die Steuereinheit 300 ist dazu eingerichtet, ein Gewichtssignal zu empfangen, wobei das Gewichtssignal indikativ für eine Masse an einem Lebensmittelprodukt ist, welches in die Gießform 12 gefüllt wurde, wobei die Steuereinheit 300 dazu eingerichtet ist, basierend auf dem Gewichtssignal und einer Referenz eines Gewichts der Gießform 12 ein Anpassungssignal auszusenden, wobei das Anpassungssignal dazu eingerichtet ist, das Gewichtssignal an die Referenz anzunähern.

## Patentansprüche

1. Fördersystem (10) für Gießformen (12) zur Herstellung von Lebensmittelprodukten, insbesondere Süßwaren, aufweisend:
- eine Fördereinheit (14),
- zumindest eine Gießform (12),
- eine Waageneinheit (16),
wobei die Fördereinheit (14) dazu eingerichtet, eine kraft- und/oder formschlüssige Verbindung (18) mit zumindest einer Gießform (12) auszubilden, wobei die Fördereinheit (14) dazu eingerichtet ist, die Gießform (12) entlang einer vordefinierten Förderrichtung (20) bei einer vorbestimmten Geschwindigkeit zu transportieren, wenn die kraft- und/oder formschlüssige Verbindung (18) vorliegt, wobei die Waageneinheit (16) entlang der Förderrichtung (20) angeordnet ist, wobei die Waageneinheit (16) dazu eingerichtet ist, die Gießform (12) für eine vorbestimmte Distanz (22) entlang der Förderrichtung (20) bei einer zweiten Geschwindigkeit zu transportieren, wobei die Fördereinheit (14) dazu eingerichtet ist, zumindest für die vorbestimmte Distanz (22) die kraft- und/oder formschlüssige Verbindung (18) im Wesentlichen aufzulösen, wobei die Waageneinheit (16) dazu eingerichtet ist, innerhalb der vorbestimmten Distanz (22) ein Gewicht der Gießform (12) zu ermitteln.

2. Fördersystem (10) nach Anspruch 1, wobei die zweite Geschwindigkeit gleich oder größer als die vorbestimmte Geschwindigkeit ist, sodass das Gewicht der Gießform (12) kontaktfrei zur Fördereinheit (14) ermittelt wird.

3. Fördersystem (10) nach einem der vorherigen Ansprüche, wobei die Fördereinheit (14) zumindest eine erste Bandeinheit (24) und eine zweite Bandeinheit (26) aufweist, an welcher jeweils zumindest ein Eingriffselement (28) angeordnet ist, welches dazu eingerichtet ist, in die Gießform (12) einzugreifen, um die kraft- und/oder formschlüssige Verbindung (18) herzustellen, wobei die erste Bandeinheit (24) zu der zweiten Bandeinheit (26) im Wesentlichen gegenüberliegend parallel angeordnet ist, wobei die Fördereinheit (14) ein erstes Führungselement (25) und ein zweites Führungselement (27) aufweist, welche dazu eingerichtet sind, die erste Bandeinheit (24) und die zweite Bandeinheit (26) zu führen, wobei das erste Führungselement (25) und das zweite Führungselement (27) dazu eingerichtet sind, einen Abstand (29) entlang einer ersten Achse (32) zwischen den gegenüberliegenden Eingriffselementen (28) zu erhöhen.

4. Fördersystem (10) nach Anspruch 3, wobei das erste Führungselement (25) und das zweite Führungselement (27) dazu eingerichtet sind, den Abstand (29) zwischen den Eingriffselementen (28) bis zu einem vorbestimmten Grenzwert zu erhöhen, um die kraft- und/oder formschlüssige Verbindung (18) für die vorbestimmte Distanz (22) aufzulösen.

5. Fördersystem (10) nach einem der Ansprüche 3 bis 4, wobei das erste Führungselement (25) und das zweite Führungselement (27) dazu eingerichtet sind, den Abstand (29) zwischen den Eingriffselementen (28) nach einem Verlassen der vorbestimmten Distanz (22) zu reduzieren, um die kraft- und/oder formschlüssige Verbindung (18) wiederherzustellen.

6. Fördersystem (10) nach einem der vorherigen Ansprüche, wobei die Fördereinheit (14) dazu eingerichtet ist, die Gießform (12) in der vorbestimmten Distanz (22) auf die Waageneinheit (16) abzulegen, um die kraft- und/oder formschlüssige Verbindung (18) aufzulösen.

7. Fördersystem (10) nach Anspruch 6, wobei die Fördereinheit (14) dazu eingerichtet ist, die Gießform (12) nach der vorbestimmten Distanz (22) von der Waageneinheit (16) aufzunehmen.

8. Fördersystem (10) nach einem der Ansprüche 3 bis 7, wobei das erste Führungselement (25) und das zweite Führungselement (27) dazu eingerichtet sind, die Eingriffselemente (28) entlang einer zweiten Achse (34) zu verlagern, welche im Wesentlichen orthogonal zur ersten Achse (32) ausgerichtet ist, um die Gießform (12) auf die Waageneinheit (16) abzulegen und/oder von der Waageneinheit (16) aufzunehmen.

9. Fördersystem (10) nach Anspruch 8, wobei das erste Führungselement (25) und das zweite Führungselement (27) dazu eingerichtet sind, die kraft- und/oder formschlüssige Verbindung (18) mittels einer zwei-dimensionalen Bewegung entlang der ersten Achse (32) und der zweiten Achse (34) aufzulösen und/oder herzustellen.

10. Fördersystem (10) nach einem der vorherigen Ansprüche, wobei die Waageneinheit (16) zumindest ein Bewegungselement (36) aufweist, welches dazu eingerichtet ist, die Gießform (12) für die vorbestimmte Distanz (22) bei der zweiten Geschwindigkeit zu transportieren.

11. Fördersystem (10) nach einem der vorherigen Ansprüche, wobei das Fördersystem (10) zumindest ein Sensorelement (38) aufweist, wobei die Waageneinheit (16) dazu eingerichtet ist, mittels des Sensorelements (38) eine Position der Gießform (12) zu ermitteln, wobei die Waageneinheit (16) dazu eingerichtet ist, das Gewicht der Gießform (12) zu ermitteln, wenn die Position der Gießform (12) in der vorbestimmten Distanz (22) ist.

12. Fördersystem (10) nach einem der vorherigen Ansprüche, wobei die Waageneinheit (16) einen Hubmechanismus (40) aufweist, wobei der Hubmechanismus (40) dazu eingerichtet ist, die Waageneinheit (16) derart von der Förderrichtung (20) zu beabstanden, dass für einen vorbestimmten Zeitraum die Waageneinheit (16) frei von einem Kontakt mit einer Gießform (12) ist, um die Waageneinheit (16) zu tarieren.

13. Verfahren (200) zum Betreiben eines Fördersystems (10) zur Herstellung von Lebensmittelprodukten, insbesondere Süßwaren, aufweisend die Schritte:
- Positionieren (S1) einer Gießform (12) auf einer Waageneinheit (16) bei einer vorbestimmten Verfahrgeschwindigkeit der Gießform (12),
- Ermitteln (S2) eines Gewichts der Gießform (12) mittels der Waageneinheit (16) bei zumindest der vorbestimmten Verfahrgeschwindigkeit,
wobei die Gießform (12) beim Ermitteln des Gewichts der Gießform (12) im Wesentlichen frei von einem Kontakt zu einer Fördereinheit (14) des Fördersystems (10) ist.

14. Steuereinheit (300) zum Betreiben eines Fördersystems (10), welche dazu eingerichtet ist, Schritte des Verfahrens (200) gemäß Anspruch 14 auszuführen und/oder dazu eingerichtet ist, in Signalverbindung mit einem Fördersystem (10) gemäß einem der Ansprüche 1 bis 13 zu stehen und/oder dazu eingerichtet ist, ein erstes Geschwindigkeitssignal und ein zweites Geschwindigkeitssignal zu empfangen, wobei das erste Geschwindigkeitssignal indikativ für eine Transportgeschwindigkeit einer Gießform (12) bei einem Kontakt mit einer Fördereinheit (14) ist, wobei das zweite Geschwindigkeitssignal indikativ für eine Fördergeschwindigkeit einer Waageneinheit (16) ist, wenn die Gießform (12) in Kontakt zur Waageneinheit (16) steht und im Wesentlichen kontaktfrei zu der Fördereinheit (14) ist, wobei die Steuereinheit (300) dazu eingerichtet ist, ein Deltasignal auszugeben, wobei das Deltasignal dazu eingerichtet ist, das erste Geschwindigkeitssignal und/oder das zweite Geschwindigkeitssignal anzupassen, um den Kontakt zwischen der Gießform (12) und der Fördereinheit (14) aufzulösen und/oder den kontaktfreien Zustand aufrechtzuerhalten.

15. Steuereinheit (300) nach Anspruch 14, wobei die Steuereinheit (300) dazu eingerichtet ist, ein Gewichtssignal zu empfangen, wobei das Gewichtssignal indikativ für eine Masse an einem Lebensmittelprodukt ist, welches in die Gießform (12) gefüllt wurde, wobei die Steuereinheit (300) dazu eingerichtet ist, basierend auf dem Gewichtssignal und einer Referenz eines Gewichts der Gießform (12) ein Anpassungssignal auszusenden, wobei das Anpassungssignal dazu eingerichtet ist, das Gewichtssignal an die Referenz anzunähern.

## Geänderte Patentansprüche

### Geänderte Patentansprüche gemäss Regel 137(2) EPÜ.

1. Fördersystem (10) für Gießformen (12) zur Herstellung von Lebensmittelprodukten, insbesondere Süßwaren, aufweisend:
- eine Fördereinheit (14),
- zumindest eine Gießform (12),
- eine Waageneinheit (16),
wobei die Fördereinheit (14) dazu eingerichtet, eine kraft- und/oder formschlüssige Verbindung (18) mit zumindest einer Gießform (12) auszubilden, wobei die Fördereinheit (14) dazu eingerichtet ist, die Gießform (12) entlang einer vordefinierten Förderrichtung (20) bei einer vorbestimmten Geschwindigkeit zu transportieren, wenn die kraft- und/oder formschlüssige Verbindung (18) vorliegt, wobei die Waageneinheit (16) entlang der Förderrichtung (20) angeordnet ist, wobei die Waageneinheit (16) dazu eingerichtet ist, die Gießform (12) für eine vorbestimmte Distanz (22) entlang der Förderrichtung (20) bei einer zweiten Geschwindigkeit zu transportieren, wobei die Fördereinheit (14) dazu eingerichtet ist, zumindest für die vorbestimmte Distanz (22) die kraft- und/oder formschlüssige Verbindung (18) im Wesentlichen aufzulösen, wobei die Waageneinheit (16) dazu eingerichtet ist, innerhalb der vorbestimmten Distanz (22) ein Gewicht der Gießform (12) zu ermitteln.

2. Fördersystem (10) nach Anspruch 1, wobei die zweite Geschwindigkeit gleich oder größer als die vorbestimmte Geschwindigkeit ist, sodass das Gewicht der Gießform (12) kontaktfrei zur Fördereinheit (14) ermittelt wird.

3. Fördersystem (10) nach einem der vorherigen Ansprüche, wobei die Fördereinheit (14) zumindest eine erste Bandeinheit (24) und eine zweite Bandeinheit (26) aufweist, an welcher jeweils zumindest ein Eingriffselement (28) angeordnet ist, welches dazu eingerichtet ist, in die Gießform (12) einzugreifen, um die kraft- und/oder formschlüssige Verbindung (18) herzustellen, wobei die erste Bandeinheit (24) zu der zweiten Bandeinheit (26) im Wesentlichen gegenüberliegend parallel angeordnet ist, wobei die Fördereinheit (14) ein erstes Führungselement (25) und ein zweites Führungselement (27) aufweist, welche dazu eingerichtet sind, die erste Bandeinheit (24) und die zweite Bandeinheit (26) zu führen, wobei das erste Führungselement (25) und das zweite Führungselement (27) dazu eingerichtet sind, einen Abstand (29) entlang einer ersten Achse (32) zwischen den gegenüberliegenden Eingriffselementen (28) zu erhöhen.

4. Fördersystem (10) nach Anspruch 3, wobei das erste Führungselement (25) und das zweite Führungselement (27) dazu eingerichtet sind, den Abstand (29) zwischen den Eingriffselementen (28) bis zu einem vorbestimmten Grenzwert zu erhöhen, um die kraft- und/oder formschlüssige Verbindung (18) für die vorbestimmte Distanz (22) aufzulösen.

5. Fördersystem (10) nach einem der Ansprüche 3 bis 4, wobei das erste Führungselement (25) und das zweite Führungselement (27) dazu eingerichtet sind, den Abstand (29) zwischen den Eingriffselementen (28) nach einem Verlassen der vorbestimmten Distanz (22) zu reduzieren, um die kraft- und/oder formschlüssige Verbindung (18) wiederherzustellen.

6. Fördersystem (10) nach einem der vorherigen Ansprüche, wobei die Fördereinheit (14) dazu eingerichtet ist, die Gießform (12) in der vorbestimmten Distanz (22) auf die Waageneinheit (16) abzulegen, um die kraft- und/oder formschlüssige Verbindung (18) aufzulösen.

7. Fördersystem (10) nach Anspruch 6, wobei die Fördereinheit (14) dazu eingerichtet ist, die Gießform (12) nach der vorbestimmten Distanz (22) von der Waageneinheit (16) aufzunehmen.

8. Fördersystem (10) nach einem der Ansprüche 3 bis 7, wobei das erste Führungselement (25) und das zweite Führungselement (27) dazu eingerichtet sind, die Eingriffselemente (28) entlang einer zweiten Achse (34) zu verlagern, welche im Wesentlichen orthogonal zur ersten Achse (32) ausgerichtet ist, um die Gießform (12) auf die Waageneinheit (16) abzulegen und/oder von der Waageneinheit (16) aufzunehmen.

9. Fördersystem (10) nach Anspruch 8, wobei das erste Führungselement (25) und das zweite Führungselement (27) dazu eingerichtet sind, die kraft- und/oder formschlüssige Verbindung (18) mittels einer zwei-dimensionalen Bewegung entlang der ersten Achse (32) und der zweiten Achse (34) aufzulösen und/oder herzustellen.

10. Fördersystem (10) nach einem der vorherigen Ansprüche, wobei die Waageneinheit (16) zumindest ein Bewegungselement (36) aufweist, welches dazu eingerichtet ist, die Gießform (12) für die vorbestimmte Distanz (22) bei der zweiten Geschwindigkeit zu transportieren.

11. Fördersystem (10) nach einem der vorherigen Ansprüche, wobei das Fördersystem (10) zumindest ein Sensorelement (38) aufweist, wobei die Waageneinheit (16) dazu eingerichtet ist, mittels des Sensorelements (38) eine Position der Gießform (12) zu ermitteln, wobei die Waageneinheit (16) dazu eingerichtet ist, das Gewicht der Gießform (12) zu ermitteln, wenn die Position der Gießform (12) in der vorbestimmten Distanz (22) ist.

12. Fördersystem (10) nach einem der vorherigen Ansprüche, wobei die Waageneinheit (16) einen Hubmechanismus (40) aufweist, wobei der Hubmechanismus (40) dazu eingerichtet ist, die Waageneinheit (16) derart von der Förderrichtung (20) zu beabstanden, dass für einen vorbestimmten Zeitraum die Waageneinheit (16) frei von einem Kontakt mit einer Gießform (12) ist, um die Waageneinheit (16) zu tarieren.

13. Verfahren (200) zum Betreiben eines Fördersystems (10) zur Herstellung von Lebensmittelprodukten, insbesondere Süßwaren, aufweisend die Schritte:
- Positionieren (S1) einer Gießform (12) auf einer Waageneinheit (16) bei einer vorbestimmten Verfahrgeschwindigkeit der Gießform (12),
- Ermitteln (S2) eines Gewichts der Gießform (12) mittels der Waageneinheit (16) bei zumindest der vorbestimmten Verfahrgeschwindigkeit,
wobei die Gießform (12) beim Ermitteln des Gewichts der Gießform (12) im Wesentlichen frei von einem Kontakt zu einer Fördereinheit (14) des Fördersystems (10) ist.

14. Steuereinheit (300) zum Betreiben eines Fördersystems (10), welche dazu eingerichtet ist, Schritte des Verfahrens (200) gemäß Anspruch 13 auszuführen und/oder dazu eingerichtet ist, in Signalverbindung mit einem Fördersystem (10) gemäß einem der Ansprüche 1 bis 12 zu stehen und/oder dazu eingerichtet ist, ein erstes Geschwindigkeitssignal und ein zweites Geschwindigkeitssignal zu empfangen, wobei das erste Geschwindigkeitssignal indikativ für eine Transportgeschwindigkeit einer Gießform (12) bei einem Kontakt mit einer Fördereinheit (14) ist, wobei das zweite Geschwindigkeitssignal indikativ für eine Fördergeschwindigkeit einer Waageneinheit (16) ist, wenn die Gießform (12) in Kontakt zur Waageneinheit (16) steht und im Wesentlichen kontaktfrei zu der Fördereinheit (14) ist, wobei die Steuereinheit (300) dazu eingerichtet ist, ein Deltasignal auszugeben, wobei das Deltasignal dazu eingerichtet ist, das erste Geschwindigkeitssignal und/oder das zweite Geschwindigkeitssignal anzupassen, um den Kontakt zwischen der Gießform (12) und der Fördereinheit (14) aufzulösen und/oder den kontaktfreien Zustand aufrechtzuerhalten.

15. Steuereinheit (300) nach Anspruch 14, wobei die Steuereinheit (300) dazu eingerichtet ist, ein Gewichtssignal zu empfangen, wobei das Gewichtssignal indikativ für eine Masse an einem Lebensmittelprodukt ist, welches in die Gießform (12) gefüllt wurde, wobei die Steuereinheit (300) dazu eingerichtet ist, basierend auf dem Gewichtssignal und einer Referenz eines Gewichts der Gießform (12) ein Anpassungssignal auszusenden, wobei das Anpassungssignal dazu eingerichtet ist, das Gewichtssignal an die Referenz anzunähern.
